# EUROPEAN PATENT SPECIFICATION

(11) **EP 2 089 694 B1**
(45) Date of publication and mention of the grant of the patent: **30.08.2017**
(21) Application number: 07851897.4
(22) Date of filing: 07.12.2007
(51) Int. Cl.: G01N 22/04, G01F 1/66, G01F 1/74, G01N 9/24, G01S 13/00, E02D 3/00

(54) **SYSTEM AND METHOD FOR MEASURING A CONCENTRATION PARAMETER OF A SOLID/LIQUID MIXTURE IN A CONVEYOR PIPE**
SYSTEM UND VERFAHREN ZUR MESSUNG EINES KONZENTRATIONSPARAMETERS EINER FESTEN/FLÜSSIGEN MISCHUNG IN EINEM FÖRDERROHR
SYSTÈME ET PROCÉDÉ PERMETTANT DE MESURER UN PARAMÈTRE DE CONCENTRATION D'UN MÉLANGE SOLIDE/LIQUIDE DANS UN TUYAU TRANSPORTEUR

(30) Priority: 08.12.2006 NL 2000362
(43) Date of publication of application: 19.08.2009
(73) Proprietor: IHC Holland IE B.V., 3361 EP Sliedrecht (NL)
(72) Inventor: VAN EETEN, Marius Johannes Cornelis, 3081 PP Rotterdam (NL); BEIJERINCK, Herman Coenraad Willem, 2582 TN Den Haag (NL); TIJHUIS, Antonius Gregorius, 5673 AK Nuenen (NL); DE KEIZER, Cornelis, 3328 BC Dordrecht (NL)
(74) Representative: Nederlandsch Octrooibureau
(86) International application number: PCT/NL2007/050637
(87) International publication number: WO 2008/069670

(56) References cited:
- WO-A-2006/120996
- US-A- 5 719 340
- US-A- 5 939 888
- DATABASE WPI Week 199735 Derwent Publications Ltd., London, GB; AN 1997-376164 XP002446082 & JP 09 159623 A (KODEN SEISAKUSHO KK) 20 June 1997 (1997-06-20) cited in the application
- DATABASE WPI Week 200039 Derwent Publications Ltd., London, GB; AN 2000-447170 XP002446083 & JP 2000 160542 A (WIRE DEVICE KK) 13 June 2000 (2000-06-13)

## Description

The present invention relates to a system for the measuring of a concentration in a solid/liquid mixture according to the preamble of Claim 1.

The system also relates to a method for the measuring of a concentration in a solid/liquid mixture. A system and method of this type are used, for example, in conveyor pipes of dredgers.

For optimally efficient conveyance of a solid/liquid mixture in a conveyor pipe, use is made of sensors for measuring process parameters which can characterize the quality of the conveying process. These process parameters can also be used (automatically) to regulate the conveying process.

One process parameter relates to the mixture concentration, i.e. a concentration of a solid matter (for example sand) in a conveying liquid (for example water).

Regulation of the mixture concentration is important for a dredging process. An excessively low mixture concentration leads to an inefficient dredging process because too little solid is pumped through the conveying liquid per unit of time. An excessively high concentration, on the other hand, is also undesirable, since this can cause the pipe to become silted up. For an optimally efficient dredging process, it is therefore conventional to keep the mixture concentration during dredging as constant as possible as a function of the soil type, dredging depth, excavation speed, the lift of the pump, the available capacity of the pump and the desired mixing speed.

In order to ascertain the mixture concentration, use is made in the dredging industry of a system and method which determine the mixture concentration in the pipe by means of a radioactive source.

A mixture concentration can be derived by measuring the relative intensity of the radioactive (γ) radiation which passes through the conveyor pipe during conveyance of the dredging mixture through the conveyor pipe. However, the use of a radioactive source is not without certain drawbacks.

In some countries, there are legal restrictions on the transportation and/or use of radioactive sources. This often complicates use on board a dredger. Nor does the transportation of a source to a dredger from a nuclear plant or the storage of radioactive material go unchecked by the law. In addition, the use of radioactive sources is subject to various requirements with regard to radiation protection and safety. Furthermore, public opinion often frowns on the use of radioactive sources.

The prior art utilizes electromagnetic waves to determine density in liquid/solid mixtures. JPH09159623 describes a system and method for measuring the amount of solid matter in a solid/liquid mixture with the aid of radio wave radiation. Antennas are positioned on the outer edge of the conveyor pipe. In order to allow irradiation of the mixture, the conveyor pipe should at the site of the antennas be made of a plastics material.

A drawback JPH09159623 is that the radio wave radiation is used unprotected. In addition, the use of a plastics material pipe in systems in which solid/liquid mixtures are pumped, such as for example dredging systems, is undesirable on account of the relatively low resistance of plastics material to wear caused by solid particles such as, for example, sand. The relatively low compressive strength of plastics material can also be an impediment on account of the pressure used in the dredging conveyor pipe.

The object of the present invention is to provide a system and a method for the measuring of concentrations in a solid/liquid mixture that has no or fewer drawbacks than the system according to the prior art.

This object is achieved by a system as defined in Claim 1.

The present invention utilizes the fact that the antennas can be located against the pipe wall without thereby adversely affecting the electromagnetic functioning of the antennas.

An advantage of the invention is that the conveyor pipe can be made entirely of metal, thus allowing the strength of the pipe wall to increase with respect to the prior art. Furthermore, the invention screens off from the environment the radiation emitted from the antennas through the metal pipe wall, thus providing a better signal-to-noise ratio and therefore protecting the environment from the radiation in the pipe, so better electromagnetic compatibility is obtained. Since it is possible to position the antennas directly on the pipe wall, the invention has the advantage that a protected cover layer can be attached to the inside of the pipe wall substantially unaltered via the antennas.

The invention will be described hereinafter in greater detail with reference to various drawings representing exemplary embodiments of the invention. These exemplary embodiments are intended exclusively for the purposes of illustration and not to restrict the idea of the invention which is defined by the claims.

In the drawings:
Figure 1 is a schematic cross section of a conveyor pipe provided with a system according to the present invention;
Figure 2 is an enlarged view of a portion of the cross section from Figure 1;
Figure 3 is a schematic plan view of an antenna;
Figure 4 is a schematic cross section of the antenna according to Figure 4;
Figure 5 shows an alternative embodiment;
Figure 6 is a schematic cross section of a conveyor pipe provided with an additional external conductivity meter; and
Figure 7 shows an embodiment comprising a plurality of antennas for the measuring of a mixture distribution as a "tomographic" image.

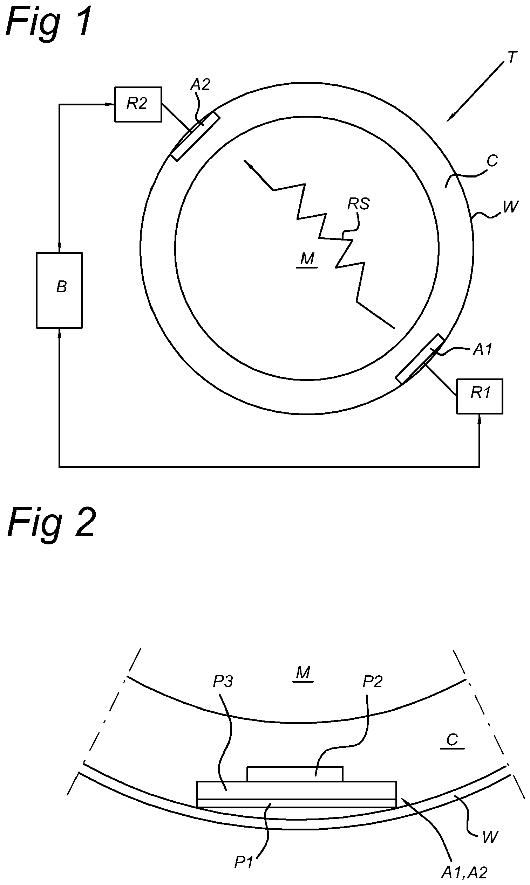

Figure 1 is a schematic cross section of a conveyor pipe T provided with a system according to the present invention. A portion of the conveyor pipe T serves as a housing for a measurement volume V in which the system can measure a concentration parameter of a solid/liquid mixture M. The term "a concentration parameter" refers to a parameter which describes a composition of the solid/liquid mixture such as the density of the mixture or the concentration of solid matter in the mixture.

The housing of the measurement volume V is provided with a first antenna A1 and a second antenna A2, the first and second antennas A1, A2 being of the patch antenna type. The 'patch antenna' type is also referred to as a microstrip antenna. The manner in which this type of antenna is implemented in the present invention will be examined in greater detail hereinafter.

The antennas A1 and A2 are both located on the wall W of the conveyor pipe T in the measurement volume V.

Preferably, the second antenna A2 is located opposite the first antenna A1 (i.e. in a direct visibility line), the measurement volume being located between the first and second antennas.

The wall W is lined with a cover layer C which electrically and mechanically protects both the wall W and the first and second antennas A1, A2 from the measurement volume V which contains the solid/liquid mixture M during use.

The possibility of positioning the antennas against the wall thus provides a passage for the conveyor pipe without obstacles for a mixture flowing along the pipe.

The cover layer C is made of a wear-resistant dielectric material which is relatively resistant to an abrasive effect of the solid/liquid mixture M.

The wall W of the housing of the measurement volume is made of a suitable metal in order to be able to resist during operation the pressure which occurs in the pipe. In addition, this screens off the antennas from the environment outside the conveyor pipe T.

The first transmitter A1 is connected to a transmitter R1 for the forwarding of radio signals from the transmitter R1 to the medium surrounding the antenna A1.

The second antenna A2 is connected to a receiver R2 for the forwarding of radio signals from the medium surrounding the second antenna A2 to the receiver R2.

During use, the transmitter R1 emits radio signals having irradiated energy E1 into the measurement volume V of the conveyor pipe T containing the mixture M to be measured. The radio signals (electromagnetic radiation) which propagate through the medium are represented by the arrow RS. The receiver R2 receives the radio signals having residual energy E2 after passing through the measurement volume.

Depending on the physical properties of the mixture such as dielectric permittivity and magnetic permeability, energy from the electromagnetic field is absorbed in a manner which can in principle be determined from the ratio between the energy E1 irradiated by the transmitter R1 into the measurement volume and the residual energy E2 as measured by the receiver R2.

The composition of the mixture M can be derived from this ratio.

Furthermore, more precise information about the mixture can also be obtained from the time delay which radio signals experience when passing through the measurement volume.

Various forms of usable radio signals are possible. Examples include pulses, signals of which a surrounding amplitude varies sinusoidally over time, and frequency sweep signals.

In Figure 1, R1 denotes a transmitter and R2 denotes a receiver. It is possible to use for R1 and R2 transceivers which can be used both as a transmitter and as a receiver, so the direction of the measurements can optionally be reversed.

In the invention, the transceivers R1 and R2 are connected to a control unit B such as, for example, a computer in order to be able to take measurements of the loss of energy and/or the delay time in the mixture M automatically and possibly over a specific period of time and/or in accordance with an adjustable pattern. The control unit can also provide a calculation of a mixture concentration parameter based on test results obtained.

Figure 2 is an enlarged view of a portion of the cross section from Figure 1 in a first embodiment.

In Figure 2, like reference numerals as used in the preceding Figure 1 refer to corresponding components.

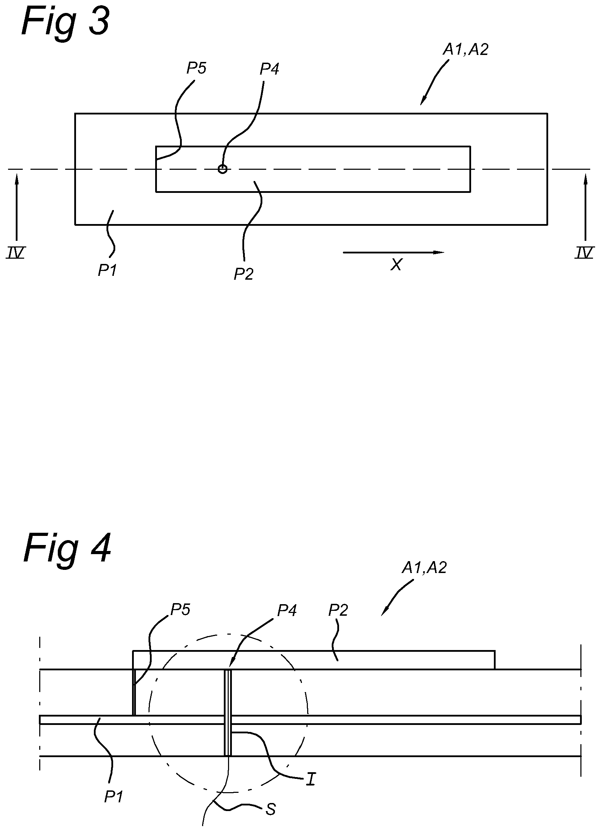

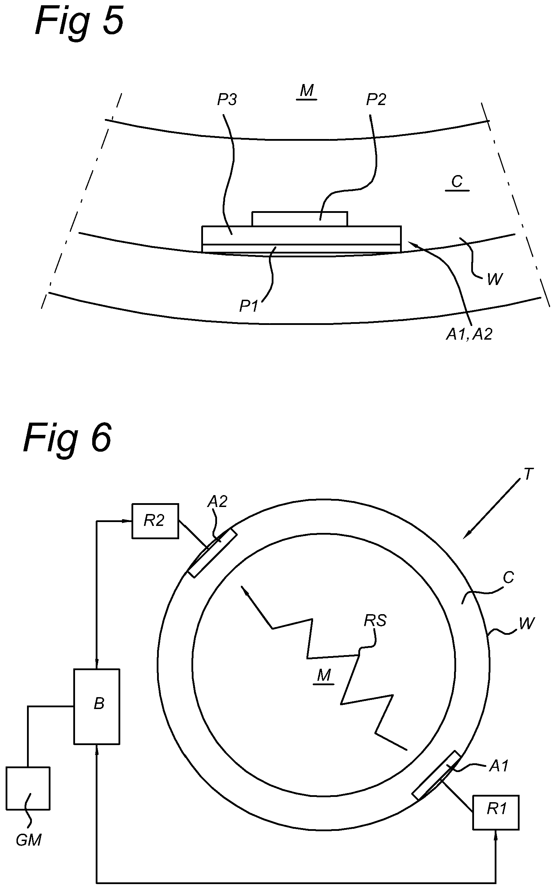

The first and second patch antennas A1, A2 are each made up of a metal base plate P1 and a metal strip P2 which are separated from each other by means of a dielectric P3. Although not shown in this figure, Figure 2, the base plate P1 and the strip P2 are joined together, as will be illustrated more precisely in Figures 4 and 5.

The base plate P1 is in contact with the wall W of the conveyor pipe T. Owing to the properties of the patch antenna A1, A2, there can be conductive contact between the wall W and the base plate P1 of the antenna without this disturbing the antenna function (the electromagnetic effect). As a result and in contrast to other types of antenna which, conversely, would require insulation between the antenna and the wall, the patch antenna A1, A2 can advantageously be positioned very close to the wall W.

Located between the wall W and the base plate P1 is, in this embodiment, a cavity which is filled with a filling D. The filling D is used to support the antenna A1, A2 so that during operation elevated pressure within the conveyor pipe T will not deform the antenna A1, A2.

Alternatively, the electrically conductive function of the plate P1 can be performed by the wall W, so the plate P1 can be dispensed with. For this purpose, the wall W is made flat.

Alternatively, in this embodiment, the plate P1, the dielectric P3 and the strip P2 can be curved in the shape of the inner edge of the wall W, so the filling D can be dispensed with.

The cover layer C separates the strip P2 from the space which contains the solid/liquid mixture M during operation.

The filling D is made of a compression-resistant material, can comprise a plastics material such as Irathane or other plastics materials, but can also be made of a ceramic materials such as, for example, aluminium oxide.

The cover layer C is made of an electrically insulating plastics material which has high resistance to wear caused by the solid/liquid mixture M which flows along the pipe during use. Examples include Irathane. Depending on the composition of the solid/liquid mixture, the cover layer C can also be made of a different electrically insulating material or of ceramic tiles which may or may not be encased in a plastics material. In order to prevent an excessive amount of the energy E1 emitted by the patch antenna A1 from propagating to the patch antenna A2 along the pipe wall W via the cover layer C, it is possible to make the cover layer locally conductive, for example by doping the plastics material at these locations with metal particles.

Figure 3 is a schematic plan view of a patch antenna in the longitudinal direction X of the conveyor pipe.

The antenna A1, A2 is of the "patch antenna" type also known as a "microstrip". A typical microstrip antenna consists of a thin electrically conductive rectangular strip P2, also known as a "patch", separated from the electrically conductive rectangular base plate P1 by an insulating element P3 also known as a "substrate". The two spatially separated conductors P1, P2 form in essence the microstrip antenna.

For the measuring of the radio signal for the purposes of density measurements, it is important that the antenna properties are such that the radio signal used can have a frequency and wavelength such that the diameter of the measurement volume (i.e. the distance in a straight line from the first antenna via the measurement volume to the second antenna) is equal to at least one half-wavelength of the radio signal.

In the present invention, the dimensions of the antenna are therefore adapted to this requirement as a function of the diameter of the measurement volume.

In conjunction with the correspondingly selected frequency of the electromagnetic waves, the length of the strip P2 (parallel to the longitudinal direction X of the conveyor pipe T) is substantially of the same order of magnitude as the diameter of the conveyor pipe. The width of the strip P2 is less than the length of the strip P2. The width can be adapted in such a way as to optimize positioning along the wall. The connection impedance of the antenna increases as the width decreases; the width of the strip also influences the radiation profile of the antenna, although this does not impede the functionality of the system.

Depending on the design of the antenna, the length of the base plate P1 may be equal to or greater than the length of the strip P2. The width of the base plate P1 may also be equal to or greater than the width of the strip P2, depending on the desired antenna properties.

It will be noted that the strip P2 can have, instead of a rectangular shape with a constant width, any other desired shape with a width extending as a function of the length, for example a shape tapering in the longitudinal direction X. An extending width of the strip P2 enables the antenna to form a radiation profile having a relatively larger bandwidth than an antenna having a rectangularly shaped strip P2.

On one side, the strip P2 of the patch antenna A1, A2 comprises a connection P5 to the base plate P1. The patch antenna A1, A2 also comprises a connection P4 for a transceiver on the strip P2.

The relative permittivity of the mixture M to be determined also plays a part in the design of the antenna, as this can influence the connection impedance.

The permittivity of the insulating element P3, which in conventional microstrip antennas can also consist of an air gap, has a marked influence on the requisite dimensions of the patch.

The losses from the antenna resulting from the transition between the antenna and the solid/liquid mixture are reduced to a minimum if the permittivity of the element P3 corresponds to the permittivity of the solid/liquid mixture. The permittivity of the solid/liquid mixture varies in the selected frequency range typically between 10 and 80, depending on the solid matter concentration.

In the present invention, the insulating element P3 is made of a material having permittivity within the typical limits for the permittivity of the solid/liquid mixture. Examples include, if the conveying liquid is water, a polymer in which powdered or fine-grained barium titanate, or another material having relatively high permittivity, is mixed so as to provide permittivity of approx. 80. The insulating element P3 could also consist of a ceramic layer having suitable permittivity, for example aluminium oxide having permittivity of approx. 10, or of a composite material. In view of the high cost price of materials having high permittivity, it may be desirable to use a material having relatively low permittivity. The use of a material having permittivity of lower than 10 and in any case greater than 1 provides a (less expensive) alternative which can be used if the electrical conductivity of the solid/liquid mixture remains limited, so a sub-optimum antenna is sufficient.

The relatively high permittivity of the insulating element P3 also ensures that the size of the antenna A1, A2 can decrease (proportionally to the square root of the permittivity) while the transmission frequency remains constant. This is of significant benefit to the practical utility of the antenna in the conveyor pipe, since this allows the dimensions of the antenna to be adapted to the dimensions of the conveyor pipe. It is also important in this regard that the antenna properties are such as to enable the radio signal used to have a frequency and wavelength such that the diameter of the measurement volume (i.e. the conveyor pipe) is equal to at least one half-wavelength.

The designation "microstrip" represents in the present invention exclusively the type and "micro" therefore does not in any way indicate the size of the antenna: in cases in which conventional airborne microstrip antennas have a patch length and width of one to several tens of millimetres, the antenna for the present invention can have, depending on the diameter to be irradiated of the conveyor pipe and in accordance with the selected frequency of the electromagnetic waves, a patch length and width of one to several tens of centimetres: typically, the patch length is of the same order of magnitude as the diameter of the conveyor pipe.

It is in the present invention possible to use the system in a conveyor pipe having a diameter ranging from approximately 10 cm to approximately 150 cm.

Both the insulating element P3 and the strip P2 are embedded in the cover layer C. Apart from protecting each of the antennas A1, A2 and the wall W from the solid/liquid mixture which scrapes along the pipe, this cover layer also enlarges the potential sphere of activity of the antennas: without the insulating cover layer C, an excessively large proportion of the energy E1 emitted by the patch antenna A1 would be lost in a conductive solid/liquid mixture as a result of electrical conduction. The cover layer C combats this loss resulting from conduction. In addition, the cover layer C influences the resonance frequencies of the antennas, and the configuration of the antenna compensates for this. In order to be able to adjust the resonance frequency of the patch antenna, the patch antenna, including the cover layer C, is calculated using a numerical model.

Figure 4 is a schematic cross section of the antenna according to Figure 3, taken along the line IV-IV.

In Figure 4, like reference numerals as used in the preceding figures refer to corresponding components.

The insulating element P3 is attached to the base plate P1. The strip P2 is located on the insulating element P3. The base plate P1 is connected to the strip P2 via the connection P5 to a narrow head side of the strip P2.

The strip P2 is connected to a transceiver R1, R2 via a connection S. A coaxial cable, consisting of the inner conductor S, a conductive protector I and insulation (not shown), is fed through an opening in the wall W and in the insulating element P3, the inner conductor S being in electrical contact with the conductive strip P2 via the connection P4 and the conductive protector I in electrical contact with the wall W and/or the base plate P1. The inner conductor S is connected to the strip P2 via feed-throughs in the base plate P1 and the insulating element P3.

Figure 5 is an enlarged view of a portion of the cross section from Figure 1 in an alternative embodiment.

In Figure 5, like reference numerals as used in the preceding figures refer to corresponding components.

In this alternative embodiment, there is attached in the wall W a flattened, recessed surface W1 in which the base plate can be received, wherein the patch antenna A1, A2 can, with the entire surface area of the base plate P1, be in contact with the wall W.

In particular for a relatively small diameter of the conveyor pipe, the alternative embodiment can be advantageous in order to be able to install a patch antenna having suitable dimensions.

In a further embodiment, the wall W serves as a base plate P1 of a patch antenna. The wall W assumes the electromagnetic function of the base plate P1.

Figure 6 is a schematic cross section of a conveyor pipe provided with a system in a further embodiment.

In Figure 6, like reference numerals as used in the preceding figures refer to corresponding components.

In a further embodiment, the system comprises, in addition to elements already shown in Figure 1, an external electrical conductivity meter GM, the electrical conductivity meter GM being connected to the control unit B for the forwarding of conductivity signals to the control unit B and the electrical conductivity meter GM being configured for the measuring during use of the conductivity of only the conveying liquid.

The electrical conductivity meter is located during use substantially in the conveying liquid of the solid/liquid mixture.

It is known that the attenuation of electromagnetic waves in a conductive medium increases in tandem with the conductivity of the medium and with the frequency of the electromagnetic waves. As a result of this increasing attenuation, the upper limit of the frequency to be used is determined by the maximum admissible signal attenuation in the conductive medium. The lower limit of the frequency to be used of the electromagnetic waves is selected in such a way that, in an average mixture composition, at least one half-wavelength fits between the two antennas.

As stated hereinbefore, the density of the solid/liquid mixture can be determined from a loss of energy or a time delay of radio signals which pass from the first antenna, through the measurement volume, to the second antenna. This loss of energy or this time delay is related to the effective relative permittivity of the solid/liquid mixture M of which a measurement is taken. The components (i.e. a solid and a liquid) of which the mixture consists have per se differing relative permittivity.

As a result of the fact that the measured relative permittivity corresponds to the effective relative permittivity which varies between the relative permittivity values of the separate (two) components, a volume ratio of the components can be determined therefrom.

The permittivity of the mixture can be measured by means of irradiation with electromagnetic waves, a propagation time t, defined as the time that a wave front requires to reach the second antenna A2 from the first antenna A1, being indicative of an apparent permittivity of the solid/liquid mixture. The apparent permittivity differs from the effective permittivity in the sense that the influence of any conductivity of the mixture is included in the apparent permittivity.

The propagation time *t* is determined by the source signal, emitted by one of the antennas, which is to be compared with the signal received by the other antenna. The concentration of the solid/liquid mixture can be determined from a difference tr between the propagation time tm of the radio signal in the solid/liquid mixture and the propagation time t0 of the radio signal in only the conveying liquid.

During normal operation of the system, there is determined from the change in the propagation time tr, provided as tr = tm - t0, the concentration of the solid/liquid mixture with respect to the concentration of the conveying liquid.

Because the propagation time t0 of the signal in only the conveying liquid is also dependent on the electrical conductivity of the conveying liquid, which typically varies between less than 0.5 S/m for river water and 4 S/m for seawater, the dependency of the conductivity should be included in the calculation of the density of the solid/liquid mixture.

For this purpose, a calibration is carried out before a measuring session (during operation), the propagation time t0 being measured in only the conveying liquid. This calibration can be used provided that the conductivity of the conveying liquid does not significantly change during the subsequent normal operation of the system.

However, the conductivity of the conveying liquid can change during normal operation of the system, and this can occur, for example, in tidal waters, river mouths, coastal waters and the like.

If the conductivity of the conveying liquid, measured by the electrical conductivity meter GM, changes significantly, the control unit B can use the conductivity signals from the electrical conductivity meter GM to correct the propagation time measurements taken from the solid/liquid mixture.

The external electrical conductivity meter GM measures the electrical conductivity outside the conveyor pipe and not inside it because in the conveyor pipe the electrical conductivity (obviously) depends on the solid/liquid concentration.

In the case of a dredger, the electrical conductivity can be measured in the water, by positioning the electrical conductivity meter GM in the region of the excavation point, so the measured electrical conductivity corresponds as far as possible to the electrical conductivity of the conveying liquid.

The electrical conductivity meter determines the instantaneous conductivity of only the conveying liquid during calibration and during normal operation of the system. A change thus ascertained of the conductivity should be used to correct the propagation time t0 during normal operation of the system.

It should also be noted that, in the case of a conveying liquid having relatively higher conductivity, it may be beneficial to use a radio signal frequency which is as low as possible, because at this frequency the radio signal experiences relatively minimal damping. Because the wavelength in a medium having relatively high conductivity decreases while the frequency remains constant, this allows the transmission frequency to be reduced while the conductivity increases without flouting the requirement that, in an average mixture composition, at least one half-wavelength must fit between the two antennas. By actively regulating the transmission frequency based on the measured conductivity, an optimum measurement can thus be obtained for a broader range of mixture conductivities.

In a further embodiment of the invention, more than two antennas are positioned next to one another along the inner circumference of the wall W of the measurement volume V. All of the antennas are connected to the control unit in a manner such as that described hereinbefore for a system comprising two antennas. By transmitting, under the control of the control unit, from an antenna and receiving the transmitted signal with the aid of the remaining antennas, information can be obtained about the mixture concentration on each of the measurement paths between the transmitting antenna and one of the receiving antennas. The more than two antennas are connected to the control unit in such a way that the control unit is configured to obtain, by combining the measured mixture concentrations for each measurement path, data about the mixture concentration distribution over the diameter of the pipe, for example in the form of the determining of a tomographic image of a mixture in the pipe.

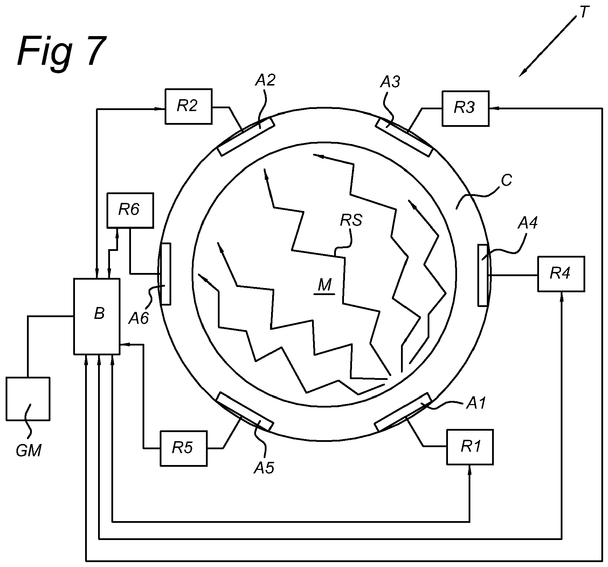

Figure 7 shows an example of a measuring system comprising six antennas A1, A2, A3, A4, A5, A6 which are each separately connected to a respective transceiver R1, R2, R3, R4, R5, R6. The transceivers are connected to the control unit B which is configured for controlling each of the transceivers (for the transmitting and/or receiving of signals) and for the receiving of signals from each of the transceivers. The control unit B is also capable of determining from the received signals information about the mixture concentration distribution within the measurement volume M.

For example, the control unit B controls the first transceiver R1 in order to transmit a radio signal RS via the first antenna A1, the other transceivers R2 - R6 being adjusted to receive the radio signal (once it has passed through the measurement volume M). Based on the received signals, the control unit then determines information about the composition of the mixture in the measurement volume as a function of the respective measurement path passed through between the first antenna and each of the remaining antennas.

The control unit can cyclically carry out a measurement of this type in a round-robin fashion, wherein in each case one of the antennas emits in succession a radio signal and the other antennas receive the signal and the control unit collects and processes the signals in a suitable manner.

It will be noted that in an alternative form, the control unit can be connected to the transceivers via a multiplexer.

## Claims

1. System for the measuring of a concentration parameter of a solid/liquid mixture (M) comprising a measurement volume (V), a first antenna (A1) and at least one second antenna (A2), wherein:
- the first and second antennas are each of the patch antenna type and each (A1; A2) comprises a conductive base plate (P1), a conductive strip (P2) and an insulating element (P3), the insulating element (P3) being located between the base plate (P1) and the strip (P2), and the strip having on a head side a conductive connection (P5) to the base plate (P1);
- the first and second antennas are attached to the conductive base plate (P1) on a wall (W) of the measurement volume, and
- the wall (W) of the measurement volume is made of metal;
further comprising a transmitter (R1) for a radio signal (RS), a receiver (R2) for the radio signal and a control unit (B), wherein an output of the transmitter (R1) is connected to the first antenna (A1); an input of the receiver (R2) is connected to the second antenna (A2); the control unit (B) is connected to the transmitter and to the receiver and the control unit (B) is configured for controlling the transmitter and the receiver;
wherein the control unit (B) is connected to a data output of the transmitter for the receiving of data via the radio signal generated by the transmitter and is also connected to a data output of the receiver for the receiving of data via the radio signal received by the receiver;
wherein the wavelength of the radio signal is selected such that a distance in a straight line from the first antenna via the measurement volume to the second antenna is substantially equal during use to at least one half-wavelength of the radio signal.

2. System according to Claim 1, wherein the control unit (B) is configured to determine during use a concentration parameter of the solid/liquid mixture (M).

3. System according to Claim 2, wherein the system also comprises an electrical conductivity meter (GM), the control unit (B) is connected to the electrical conductivity meter for the receiving of a conductivity signal, and the control unit being configured to determine during use, based on the conductivity signal, a conductivity correction for the concentration parameter.

4. System according to Claim 3, wherein the electrical conductivity meter (GM) is positioned in such a way that substantially only the conductivity of the liquid in the solid/liquid mixture (M) is measured during use.

5. System according to Claim 1, wherein a cover layer (C) is attached to the wall (W) and the first and second antennas (A1, A2) attached to the wall for protecting the wall and the antennas from the solid/liquid mixture (M).

6. System according to Claim 1, wherein a filling (D) is located between each of the first and second antennas (A1, A2) and the wall (W) of the measurement volume (V).

7. System according to Claim 1, wherein the wall (W) for the receiving of a patch antenna (A1; A2) within the base plate (P1) comprises a flattened surface (W1) for said antenna.

8. System according to Claim 1, wherein the base plate (P1), the dielectric (P3) and the conductive strip (P2) are of curved configuration such that they connect directly to the wall (W).

9. System according to any one of the preceding claims, wherein the wall (W) is the base plate (P1) of a patch antenna (A1; A2).

10. System according to Claim 1, wherein the insulating element (P3) is a dielectric having higher relative permittivity than air, preferably having relative permittivity of the liquid in the solid/mixture pertaining to a frequency or frequency range of the radio signal.

11. System according to Claim 10, wherein the insulating element consists of a plastics material/barium titanate composite or a ceramic material.

12. System according to Claim 10, wherein the base plate (P1) and the strip (P2) extend in a longitudinal direction (X) of the measurement volume (V), the length of the strip (P2) being of substantially the order of magnitude of the distance between the first antenna and the second antenna.

13. System according to Claim 12, wherein the length of the base plate (P1) is equal to at least the length of the strip (P2).

14. System according to Claim 10, wherein the connection between the first antenna (A1) or the second antenna (A2) and the transmitter (R1) respectively comprises the receiver (R2), a signal-carrying conductor (S) and a further conductor (I), the signal-carrying conductor being connected (P4) to the strip (P2) of the respective antenna (A1; A2) and the further conductor being connected to the wall (W) of the measurement volume (V) and/or the base plate (P2) of the respective antenna (A1; A2).

15. System according to Claim 14, wherein a feed-through is provided in the insulating element (P3) and in the base plate (P1) for the feeding-through of the signal-carrying conductor (S).

16. System according to Claim 10, wherein the strip (P2) of the antenna (A1; A2) is rectangular in shape.

17. System according to Claim 10, wherein the strip (P2) of the antenna (A1; A2) has a width extending as a function of the length.

18. System according to any one of the preceding claims, wherein the control unit (B) is configured to adapt during use a basic frequency of the radio signal from the transmitter (R1) as a function of the conductivity, measured by the electrical conductivity meter, of the liquid in such a way that the wavelength of the radio signal as a function of the measured conductivity is substantially constant.

19. System according to any one of the preceding claims, wherein more than two antennas are positioned along an inner circumference of the wall (W) and wherein the more than two antennas are connected in such a way that there exists during use between a transmitting antenna and each receiving antenna an associated measurement path along which the mixture concentration can be determined, the control unit being configured to determine, by combining the mixture concentrations as a function of the measurement paths, data concerning a mixture concentration distribution in the measurement volume.

20. System according to Claim 19, wherein the control unit is configured for the cyclical taking of measurements in a round-robin fashion, wherein in each case one antenna emits a radio signal and the other antennas receive the signal and the control unit collects and processes the signals in a suitable manner.

21. Method for the measuring of a concentration parameter of a solid/liquid mixture (M), including: providing a measurement volume (V) for containing the solid/liquid mixture (M); providing a first antenna (A1) and a second antenna (A2), being antennas of the patch antenna type, each (A1; A2) comprising a conductive base plate (P1), a conductive strip (P2) and an insulating element (P3), wherein the insulating element (P3) is located between the base plate (P1) and the strip (P2), and the strip having on a head side a connection (P5) to the base plate (P1); each of the first and second antennas being attached to the conductive base plate (P1) on a wall (W) of the measurement volume and the wall of the measurement volume being made of metal;
also including: transmitting of a radio signal by the first antenna; receiving of the radio signal by the second antenna and determining from a difference between the transmitted radio signal and the received radio signal a concentration parameter of the solid/liquid mixture; wherein a wavelength of the radio signal is selected such that a distance in a straight line from the first antenna via the measurement volume to the second antenna is substantially equal during use to at least one half-wavelength of the radio signal.

22. Method according to Claim 21, also including: the measuring of the electrical conductivity of only a liquid of the solid/liquid mixture and the correcting of the concentration parameter of the solid/liquid mixture with the aid of the measured electrical conductivity of the liquid:

23. Method according to any one of Claims 21 - 22, including the providing of more than two antennas positioned along an inner circumference of the wall (W); the connecting of the more than two antennas between a transmitting antenna and each receiving antenna in such a way that there exists during use an associated measurement path for determining the mixture concentration; the combining of the mixture concentrations as a function of the measurement paths in order to determine a mixture concentration distribution in the measurement volume.

## Patentansprüche

1. System zum Messen eines Konzentrationsparameters einer Feststoff/Flüssigkeits-Mischung (M), das ein Messvolumen (V), eine erste Antenne (A1) und wenigstens eine zweite Antenne (A2) umfasst, wobei:
- die erste und die zweite Antenne jeweils vom Patchantennentyp sind und jede (A1, A2) eine leitfähige Basisplatte (P1), einen leitfähigen Streifen (P2) und ein isolierendes Element (P3) umfasst, wobei sich das isolierende Element (P3) zwischen der Basisplatte (P1) und dem Streifen (P2) befindet und der Streifen auf einer Kopfseite eine leitfähige Verbindung (P5) mit der Basisplatte (P1) aufweist;
- die erste und die zweite Antenne an der leitfähigen Basisplatte (P1) auf einer Wand (W) des Messvolumens angebracht sind, und
- die Wand (W) des Messvolumens aus Metall hergestellt ist;
wobei das System ferner einen Sender (R1) für ein Funksignal (RS), einen Empfänger (R2) für das Funksignal und eine Steuereinheit (B) umfasst, wobei ein Ausgang des Senders (R1) mit der ersten Antenne (A1) verbunden ist; ein Eingang des Empfängers (R2) mit der zweiten Antenne (A2) verbunden ist; die Steuereinheit (B) mit dem Sender und mit dem Empfänger verbunden ist und die Steuereinheit (B) zum Steuern des Senders und des Empfängers konfiguriert ist;
wobei die Steuereinheit (B) mit einem Datenausgang des Senders verbunden ist zum Empfangen von Daten über das Funksignal, das durch den Sender erzeugt wird, und außerdem mit einem Datenausgang des Empfängers verbunden ist zum Empfangen von Daten über das Funksignal, das durch den Empfänger empfangen wird;
wobei die Wellenlänge des Funksignals so ausgewählt ist, dass ein Abstand auf einer Geraden von der ersten Antenne über das Messvolumen zu der zweiten Antenne während des Gebrauchs im Wesentlichen gleich wenigstens einer halben Wellenlänge des Funksignals ist.

2. System nach Anspruch 1, wobei die Steuereinheit (B) konfiguriert ist, während des Gebrauchs einen Konzentrationsparameter der Feststoff/Flüssigkeits-Mischung (M) zu bestimmen.

3. System nach Anspruch 2, wobei das System außerdem ein Messgerät für elektrische Leitfähigkeit (GM) umfasst, die Steuereinheit (B) mit dem Messgerät für elektrische Leitfähigkeit zum Empfangen eines Leitfähigkeitssignals verbunden ist und die Steuereinheit konfiguriert ist, während des Gebrauchs basierend auf dem Leitfähigkeitssignal eine Leitfähigkeitskorrektur für den Konzentrationsparameter zu bestimmen.

4. System nach Anspruch 3, wobei das Messgerät für elektrische Leitfähigkeit (GM) auf eine solche Weise positioniert ist, dass im Wesentlichen nur die Leitfähigkeit der Flüssigkeit in der Feststoff/Flüssigkeits-Mischung (M) während des Gebrauchs gemessen wird.

5. System nach Anspruch 1, wobei eine Deckschicht (C) an der Wand (W) und der ersten und der zweiten Antenne (A1, A2), die an der Wand angebracht sind, zum Schützen der Wand und der Antennen vor der Feststoff/Flüssigkeits-Mischung (M) angebracht ist.

6. System nach Anspruch 1, wobei sich eine Füllung (D) zwischen jeder aus der ersten und der zweiten Antenne (A1, A2) und der Wand (W) des Messvolumens (V) befindet.

7. System nach Anspruch 1, wobei die Wand (W) zum Aufnehmen einer Patchantenne (A1, A2) innerhalb der Basisplatte (P1) eine abgeflachte Oberfläche (W1) für die Antenne umfasst.

8. System nach Anspruch 1, wobei die Basisplatte (P1), das Dielektrikum (P3) und der leitfähige Streifen (P2) von einer gekrümmten Konfiguration sind, so dass sie direkt mit der Wand (W) verbunden sind.

9. System nach einem der vorhergehenden Ansprüche, wobei die Wand (W) die Basisplatte (P1) einer Patchantenne (A1, A2) ist.

10. System nach Anspruch 1, wobei das isolierende Element (P3) ein Dielektrikum ist, das eine höhere relative Dielektrizitätskonstante als Luft aufweist, vorzugsweise eine relative Dielektrizitätskonstante der Flüssigkeit in der Feststoff/Mischung aufweist, die zu einer Frequenz oder einem Frequenzbereich des Funksignals gehört.

11. System nach Anspruch 10, wobei das isolierende Element aus einem Kunststoffmaterial/Bariumtitanat-Verbundmaterial oder einem Keramikmaterial besteht.

12. System nach Anspruch 10, wobei sich die Basisplatte (P1) und der Streifen (P2) in einer Längsrichtung (X) des Messvolumens (V) erstrecken, wobei die Länge des Streifens (P2) im Wesentlichen von derselben Größenordnung ist wie der Abstand zwischen der ersten Antenne und der zweiten Antenne.

13. System nach Anspruch 12, wobei die Länge der Basisplatte (P1) gleich wenigstens der Länge des Streifens (P2) ist.

14. System nach Anspruch 10, wobei die Verbindung zwischen der ersten Antenne (A1) oder der zweiten Antenne (A2) und dem Sender (R1) jeweils den Empfänger (R2), einen signalführenden Leiter (S) und einen weiteren Leiter (I) umfasst, wobei der signalführende Leiter mit dem Streifen (P2) der jeweiligen Antenne (A1, A2) verbunden ist (P4) und der weitere Leiter mit der Wand (W) des Messvolumens (V) und/oder der Basisplatte (P1) der jeweiligen Antenne (A1; A2) verbunden ist.

15. System nach Anspruch 14, wobei eine Durchführung in dem isolierenden Element (P3) und in der Basisplatte (P1) zum Durchführen des signalführenden Leiters (S) vorgesehen ist.

16. System nach Anspruch 10, wobei der Streifen (P2) der Antenne (A1, A2) von rechteckiger Form ist.

17. System nach Anspruch 10, wobei der Streifen (P2) der Antenne (A1; A2) eine Breite aufweist, die sich als eine Funktion der Länge erstreckt.

18. System nach einem der vorhergehenden Ansprüche, wobei die Steuereinheit (B) konfiguriert ist, während des Gebrauchs eine Grundfrequenz des Funksignals aus dem Sender (R1) als eine Funktion der durch das Messgerät für elektrische Leitfähigkeit gemessenen Leitfähigkeit der Flüssigkeit auf eine solche Weise anzupassen, dass die Wellenlänge des Funksignals als eine Funktion der gemessenen Leitfähigkeit im Wesentlichen konstant ist.

19. System nach einem der vorhergehenden Ansprüche, wobei mehr als zwei Antennen entlang eines inneren Umfangs der Wand (W) positioniert sind und wobei die mehr als zwei Antennen auf eine solche Weise verbunden sind, dass während des Gebrauchs zwischen einer Sendeantenne und jeder Empfangsantenne ein zugeordneter Messpfad existiert, entlang dem die Mischungskonzentration bestimmt werden kann, wobei die Steuereinheit konfiguriert ist, durch Kombinieren der Mischungskonzentrationen als eine Funktion der Messpfade Daten zu bestimmen, die eine Mischungskonzentrationsverteilung in dem Messvolumen betreffen.

20. System nach Anspruch 19, wobei die Steuereinheit zum zyklischen Vornehmen von Messungen auf Art eines Rundlauf-Verfahrens konfiguriert ist, wobei in jedem Fall eine Antenne ein Funksignal emittiert und die anderen Antennen das Signal empfangen und die Steuereinheit die Signale sammelt und auf geeignete Weise verarbeitet.

21. Verfahren zum Messen eines Konzentrationsparameters einer Feststoff/Flüssigkeits-Mischung (M), das enthält: Bereitstellen eines Messvolumens (V) zum Aufnehmen der Feststoff/Flüssigkeits-Mischung (M); Bereitstellen einer ersten Antenne (A1) und einer zweiten Antenne (A2), die vom Patchantennentyp sind, von denen jede (A1; A2) eine leitfähige Basisplatte (P1), einen leitfähigen Streifen (P2) und ein isolierendes Element (P3) umfasst, wobei sich das isolierende Element (P3) zwischen der Basisplatte (P1) und dem Streifen (P2) befindet und der Streifen auf einer Kopfseite eine Verbindung (P5) mit der Basisplatte (P1) aufweist; wobei jede aus der ersten und der zweiten Antenne an der leitfähigen Basisplatte (P1) auf einer Wand (W) des Messvolumens angebracht ist und die Wand des Messvolumens aus Metall hergestellt ist;
wobei das Verfahren außerdem umfasst: Senden eines Funksignals durch die erste Antenne; Empfangen des Funksignals durch die zweite Antenne und Bestimmen aus einer Differenz zwischen dem gesendeten Funksignal und dem empfangenen Funksignals eines Konzentrationsparameters der Feststoff/Flüssigkeits-Mischung; wobei eine Wellenlänge des Funksignals so ausgewählt ist, dass ein Abstand auf einer Geraden von der ersten Antenne über das Messvolumen zu der zweiten Antenne während des Gebrauchs im Wesentlichen gleich wenigstens einer halben Wellenlänge des Funksignals ist.

22. Verfahren nach Anspruch 21, das außerdem umfasst: Messen der elektrischen Leitfähigkeit nur einer Flüssigkeit aus der Feststoff/Flüssigkeits-Mischung und Korrigieren des Konzentrationsparameters der Feststoff/Flüssigkeits-Mischung mit Hilfe der gemessenen elektrischen Leitfähigkeit der Flüssigkeit.

23. Verfahren nach einem der Ansprüche 21-22, das Bereitstellen von mehr als zwei Antennen, die entlang eines inneren Umfangs der Wand (W) positioniert sind; Verbinden der zwei oder mehr Antennen zwischen einer Sendeantenne und jeder Empfangsantenne auf eine solche Weise, dass während des Gebrauchs ein zugeordneter Messpfad zum Bestimmen der Mischungskonzentration existiert; Kombinieren der Mischungskonzentrationen als eine Funktion der Messpfade, um eine Mischungskonzentrationsverteilung in dem Messvolumen zu bestimmen, enthält.

## Revendications

1. Système de mesure d'un paramètre de concentration d'un mélange solide/liquide (M) comprenant un volume de mesure (V), une première antenne (A1) et au moins une deuxième antenne (A2), dans lequel :
- les première et deuxième antennes sont chacune de type antenne patch et comprennent chacune (A1 ; A2) une plaque de base conductrice (P1), une bande conductrice (P2) et un élément isolant (P3), l'élément isolant (P3) étant situé entre la plaque de base (P1) et la bande (P2) et la bande présentant d'un côté de tête une connexion conductrice (P5) à la plaque de base (P1) ;
- les première et deuxième antennes sont fixées à la plaque de base conductrice (P1) sur une paroi (W) du volume de mesure, et
- la paroi (W) du volume de mesure est métallique ;
comprenant en outre un émetteur (R1) d'un signal radiofréquence (RS), un récepteur (R2) du signal radiofréquence et un module de commande (B), dans lequel une sortie de l'émetteur (R1) est connectée à la première antenne (A1) ; une entrée du récepteur (R2) est connectée à la deuxième antenne (A2) ; le module de commande (B) est connecté à l'émetteur et au récepteur et le module de commande (B) est configuré pour commander l'émetteur et le récepteur ;
dans lequel le module de commande (B) est connecté à une sortie de données de l'émetteur pour la réception de données par l'intermédiaire du signal radiofréquence produit par l'émetteur et est également connecté à une sortie de données du récepteur pour la réception de données par l'intermédiaire du signal radiofréquence reçu par le récepteur ;
dans lequel la longueur d'onde du signal radiofréquence est choisie pour qu'une distance en ligne droite de la première antenne, à travers le volume de mesure, à la deuxième antenne est sensiblement égale en utilisation à au moins une demi longueur d'onde du signal radiofréquence.

2. Système selon la revendication 1, dans lequel le module de commande (B) est configuré pour déterminer en utilisation un paramètre de concentration du mélange solide/liquide (M).

3. Système selon la revendication 2, dans lequel le système comprend également un conductimètre (GM), le module de commande (B) est connecté au conductimètre pour recevoir un signal de conductivité, le module de commande étant configuré pour déterminer en utilisation, à partir du signal de conductivité, une correction de conductivité pour le paramètre de concentration.

4. Système selon la revendication 3, dans lequel le conductimètre (GM) est disposé de manière à ce que sensiblement seule la conductivité du liquide dans le mélange solide/liquide (M) soit mesurée en utilisation.

5. Système selon la revendication 1, dans lequel une couche de revêtement (C) est fixée sur la paroi (W) et les première et deuxième antennes (A1, A2) fixées à la paroi pour protéger la paroi et les antennes du mélange solide/liquide (M).

6. Système selon la revendication 1, dans lequel un matériau de remplissage (D) est placé entre chacune des première et deuxième antennes (A1, A2) et la paroi (W) du volume de mesure (V).

7. Système selon la revendication 1, dans lequel la paroi (W) de réception d'une antenne patch (A1 ; A2) du côté de la plaque de base (P1) comprend une surface aplanie (W1) pour ladite antenne.

8. Système selon la revendication 1, dans lequel la plaque de base (P1), le diélectrique (P3) et la bande conductrice (P2) présentent une configuration incurvée de manière à s'appliquer directement sur la paroi (W).

9. Système selon l'une quelconque des revendications précédentes, dans lequel la paroi (W) forme la plaque de base (P1) d'une antenne patch (A1 ; A2).

10. Système selon la revendication 1, dans lequel l'élément isolant (P3) est un diélectrique présentant une permittivité relative supérieure à celle de l'air, de préférence la permittivité relative du liquide dans le solide/mélange ayant reliée à la fréquence ou dans la gamme de fréquences du signal radiofréquence.

11. Système selon la revendication 10, dans lequel l'élément isolant est constitué de matière plastique, d'un composite de titanate de baryum ou d'un matériau céramique.

12. Système selon la revendication 10, dans lequel la plaque de base (P1) et la bande (P2) s'étendent dans une direction longitudinale (X) du volume de mesure (V), la longueur de la bande (P2) étant sensiblement de l'ordre de grandeur de la distance entre la première antenne et la deuxième antenne.

13. Système selon la revendication 12, dans lequel la longueur de la plaque de base (P1) est égale à au moins la longueur de la bande (P2).

14. Système selon la revendication 10, dans lequel la connexion entre la première antenne (A1) ou la deuxième antenne (A2) et l'émetteur (R1) comprend respectivement le récepteur (R2), un conducteur porteur de signaux (S) et un autre conducteur (I), le conducteur porteur de signaux étant connecté (P4) à la bande (P2) de l'antenne respective (A1 ; A2) et l'autre conducteur étant connecté à la paroi (W) du volume de mesure (V) et/ou à la plaque de base (P2) de l'antenne respective (A1 ; A2).

15. Système selon la revendication 14, dans lequel une traversée est prévue dans l'élément isolant (P3) et dans la plaque de base (P1) pour permettre le passage du conducteur porteur de signal (S).

16. Système selon la revendication 10, dans lequel la bande (P2) de l'antenne (A1 ; A2) est de forme rectangulaire.

17. Système selon la revendication 10, dans lequel la bande (P2) de l'antenne (A1 ; A2) présente une épaisseur augmentant avec sa longueur.

18. Système selon l'une quelconque des revendications précédentes, dans lequel le module de commande (B) est configuré pour adapter en utilisation une fréquence de base du signal radio fréquence en provenance de l'émetteur (R1) en fonction de la conductivité du liquide mesurée par le conductimètre, de manière à ce que la longueur d'onde du signal radiofréquence en fonction de la conductivité mesurée soit sensiblement constante.

19. Système selon l'une quelconque des revendications précédentes, dans lequel plus de deux antennes sont disposées sur le contour interne de la paroi (W) et dans lequel plus de deux antennes sont connectées de manière à ce qu'il existe en utilisation entre une antenne émettrice et chaque antenne réceptrice un chemin de mesure associé le long duquel on peut déterminer la concentration du mélange, le module de commande étant configuré pour déterminer, en combinant les concentrations de mélange en fonction des chemins de mesure, des données de répartition de concentration du mélange dans le volume de mesure.

20. Système selon la revendication 19, dans lequel le module de commande est configuré pour une prise de mesures cyclique, à tour de rôle, dans laquelle dans chaque cas, une antenne émet un signal radiofréquence et les autres antennes reçoivent le signal et le module de commande recueille et traite les signaux de manière appropriée.

21. Procédé de mesure d'un paramètre de concentration d'un mélange solide/liquide (M), consistant à : prévoir un volume de mesure (V) destiné à contenir le mélange solide/liquide (M) ; prévoir une première antenne (A1) et une deuxième antenne (A2), ces deux antennes étant de type antenne patch, chacune (A1 ; A2) comprenant une plaque de base conductrice (P1), une bande conductrice (P2) et un élément isolant (P3), dans lequel l'élément isolant (P3) est situé entre la plaque de base (P1) et la bande (P2), et la bande présentant d'un côté de tête une connexion (P5) à la plaque de base (P1) ; chacune des première et deuxième antennes étant fixée à la plaque conductrice de base (P1) sur une paroi (W) du volume de mesure et la paroi du volume de mesure étant métallique ; comprenant également : l'émission d'un signal radiofréquence par la première antenne ; la réception du signal radiofréquence par la deuxième antenne et la détermination à partir de la différence entre le signal radiofréquence émis et le signal radiofréquence reçu un paramètre de concentration du mélange solide/liquide ; dans lequel on choisit une longueur d'onde du signal radiofréquence de telle sorte que la distance en droite ligne de la première antenne, à travers le volume de mesure, à la deuxième antenne est sensiblement égale en utilisation à au moins une demi longueur d'onde du signal radiofréquence.

22. Procédé selon la revendication 21, consistant en outre à : ne mesurer que la conductivité électrique du liquide dans le mélange solide/liquide et corriger le paramètre de concentration du mélange solide/liquide à l'aide de la conductivité électrique du liquide mesurée.

23. Procédé selon l'une quelconque est revendications 21 et 22, consistant à prévoir plus de deux antennes disposées sur le pourtour interne de la paroi (W) ; à connecter les plus de deux antennes entre une antenne émettrice et chaque antenne réceptrice de manière à ce qu'il existe en utilisation un chemin de mesure associé pour déterminer la concentration du mélange ; à combiner les concentrations du mélange en fonction des chemins de mesure pour déterminer une répartition de concentration de mélange dans le volume de mesure.
